# EUROPEAN PATENT APPLICATION

(11) **EP 3 183 958 A1**
(43) Date of publication of application: **28.06.2017**
(21) Application number: 15833005.0
(22) Date of filing: 20.08.2015
(51) Int. Cl.: A01K 69/00

(54) **FISH TRAP**

(30) Priority: 21.08.2014 KR 20140108913
(71) Applicant: Park, Chun Sun, Suwon-si, Gyeonggi-do 16356 (KR)
(72) Inventor: Park, Chun Sun, Suwon-si, Gyeonggi-do 16356 (KR)
(74) Representative: Santarelli
(86) International application number: PCT/KR2015/008724
(87) International publication number: WO 2016/028108

(57) **Abstract**

A fish trap of the present invention includes: a fish trap mesh formed with at least one entrance; at least one frame supporting the fish trap mesh; at least one luring part formed to extend from the entrance of the fish trap mesh in a direction toward the inside of the frame and including a lure opening; and an escape prevention part forming an isolated space and provided with at least one fish passage hole through which fish passes after passing through the luring opening of the at least one luring part.

## Description

### TECHNICAL FIELD

The present invention relates to a fish trap.

### BACKGROUND ART

A fishing rod, a fishing net, a fish trap, etc. are generally used to catch fish living in the sea or river. Among them, the fish trap is advantageous in catching a greater amount of fish than a fishing rod adapted to catching individual fish while being more convenient to use than a fishing net.

Fish traps have various forms and configurations and have been disclosed by Korean Utility Model Publication No. 1993-0017507, Korean Utility Model Publication No. 1999-0000001, etc.

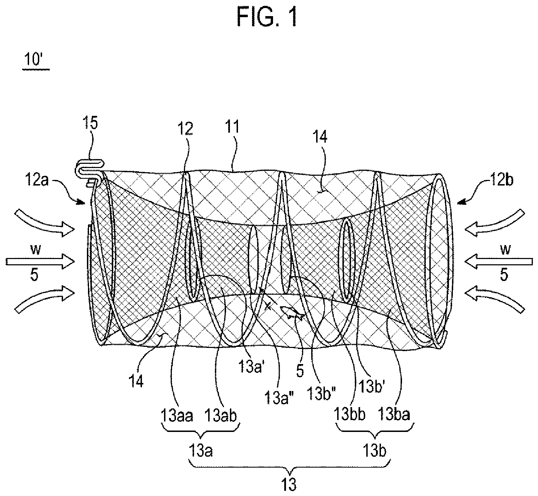

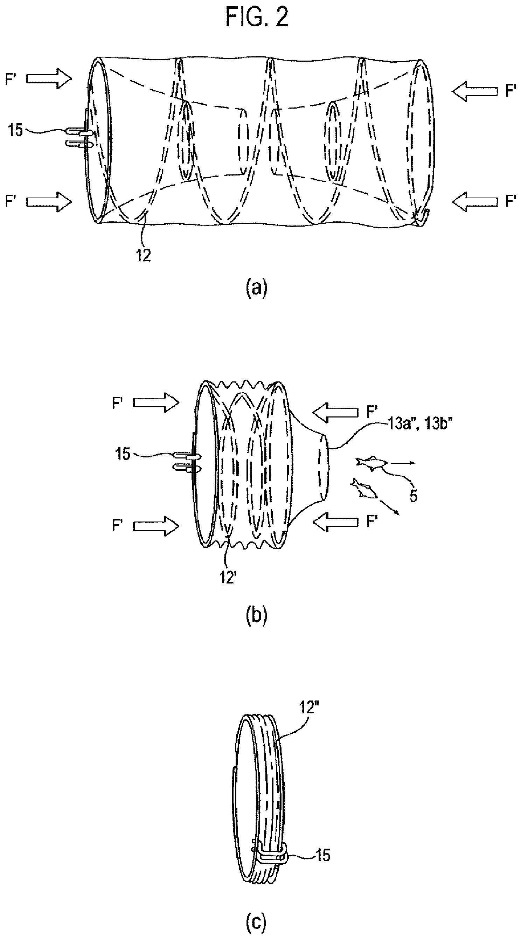

FIG. 1 shows an example of a spring fish trap among conventional fish traps, and FIG. 2 shows a method of collecting trapped fish from a fish trap.

As shown, a fish trap 10' may include a frame 12 made of a cylindrical coil spring, and a fish trap mesh 11 surrounding the outer periphery of the frame 12. The fish trap mesh is connected toward an inner center direction of the frame 12 to form entrances 12a and 12b, and the entrances 12a and 12b may further extend toward the inner center direction of the fish trap to form a luring opening 13.

Fish 5 enter first luring parts 13aa and 13ba through entrances 12a and 12b on both sides, and then passes lure frames 13a' and 13b', which support one end of the first luring parts 13aa and 13ba, respectively. After the fish passes through luring openings 13a" and 13b" of second luring parts 13ab and 13bb that are integrally connected to the first luring parts 13aa and 13ba at one end thereof and extend in a shape in which the diameter becomes narrower than that of the first luring parts 13aa and 13ba, the fish 5 can be trapped in the fish trap 10'. The trapped fish 5 may be stored in a storage portion 14. A bait (not shown) may be disposed in the storage portion 14 to lure the fish 5. If fish trapping is completed, the fish 5 within the storage portion 14 are collected by shaking the fish trap 10' on the ground. After the fish trap 10' is pressed to be flattened, the fish trap 10' is stored by fixing the opposing sides of the frame 12" of the fish trap 10' by a fish trap fixing portion 15.

In the conventional fish trap 10' above, the fish 5 stored in the storage portion 14 may easily escape through the luring parts. That is, when the fish 5 approach the vicinity of the luring openings 13a" and 13b" while going around the storage portion 14, the fish 5 may easily escape to the outside. This is problematic in that the trapped amount of the fish 5 is reduced.

Another problem is that foreign matters, such as wastes, jellyfish, etc., may flow in through the entrances 12a and 12b of the conventional fish trap 10'. If wastes or waste vinyls flow into the trap 10', they may decay within the storage portion 14 to generate bad odor and the like, thereby making it difficult to trap the fish 5 by a bait. Further, the trapped fish 5 may die due to the wastes, thereby losing merchantable quality. Furthermore, if a jellyfish flows in, the jellyfish may eat the trapped fish 5, thus reducing the amount of the trapped fish.

### DETAILED DESCRIPTION OF THE INVENTION

### Technical Problem

The present invention provides a fish trap that is capable of increasing a catch of fish.

### Means for Solving the Problem

A fish trap according to one embodiment of the present invention is used for trapping fish. The fish trap may include: a fish trap mesh formed with at least one entrance; at least one frame supporting the fish trap mesh; at least one luring part formed to extend from the entrance of the fish trap mesh in a direction toward the inside the frame and including a luring opening; and an escape prevention part forming an isolated space and provided with at least one fish passage hole through which a fish passes after passing through the luring opening of the at least one luring part.

The escape prevention part may be spaced apart from the luring part by a predetermined distance.

Opposing ends of each of the luring part and the escape prevention part may be fixed in position to the fish trap mesh by at least one connection member.

The luring part may have the luring opening that is narrower than the entrance.

The escape prevention part may further include at least one outlet through which the fish is discharged after flowing in through the fish passage hole.

The escape prevention part may be formed to surround a portion of the luring part.

The frame may include a first frame disposed at an upper side and a second frame disposed to be spaced apart from the first frame by a predetermined distance. The fish trap mesh may be coupled to the first and second frames to form a top side, a bottom side, and a side wall of the fish trap.

The first and second frames may be formed in corresponding size and shape. Alternatively, the first and second frames may be formed in different sizes and shapes. In this case, the second frame may be formed to be larger than the first frame.

The first and second frames may be formed in any one of a circular shape or a polygonal shape.

The fish trap mesh may include a pair of entrances formed at one side and an opposite side located opposite to each other. A pair of the luring parts may be disposed opposite to each other.

By way of example, the frame may include: first and second frames disposed opposite to each other; third and fourth frames disposed opposite to each other between the first and second frames in a state of being spaced apart from each other by a predetermined distance, the third and fourth frames being formed to be smaller than the first and second frames; and a coil frame connected to the first frame at one end and connected to the second frame at an opposite end so as to bias the first and second frames in a direction away from each other.

The fish trap mesh may include: a first fish trap mesh coupled to the first frame at one end and connected to the second frame at an opposite end; a second fish trap mesh coupled to the first frame at one end and connected to the third frame at an opposite end; a third fish trap mesh coupled to the second frame at one end and connected to the fourth frame at an opposite end; and a fourth fish trap mesh connected to the third frame at one end and connected to the fourth frame at an opposite end. The fourth fish trap mesh may have a cut portion at a vicinity of a center portion such that a fish entrance in close contact with the cut portion is formed when the fish trap is unfolded.

The escape prevention part may be connected to the second fish trap mesh at one end and connected to the third fish trap mesh at an opposite end so as to surround a portion of the second and third fish trap meshes and the entirety of the fourth fish trap mesh.

The fish trap may further include a fifth frame coupled to the second fish trap mesh and a sixth frame coupled to the third fish trap mesh. The one end of the escape prevention part may be coupled to the fifth frame, and the opposite end of the escape prevention part may be coupled to the sixth frame.

The fifth and sixth frames may have a width that is smaller than a width of the first and second frames and greater than or equal to a width of the third and fourth frames, and may be disposed opposite to each other.

The outlet may have any one among a circular shape, an oval shape, and a polygonal shape.

At least three outlets may be formed through the escape prevention part.

The outlets may be disposed such that a virtual extension line connecting respective centers is parallel to a virtual extension line passing through a center of the escape prevention part.

Alternatively, the outlets may be disposed such that a virtual extension line connecting respective centers forms a predetermined angle with a virtual extension line that passes through a center of the escape prevention part.

The fish trap may further include at least one partitioning fish trap mesh that is spaced apart from the outlet by a predetermined distance and is disposed between the outlet and the fish trap mesh coupled to the frame to divide an internal space of the fish trap.

The partitioning fish trap mesh may include at least one fish passage hole.

The partitioning fish trap mesh may include: a first partitioning fish trap mesh disposed at a position adjacent to the outlet to form a first fish storage portion and having at least one first fish passage hole; and a second partitioning fish trap mesh disposed to be spaced apart from the first partitioning fish trap mesh to form a second fish storage portion together with the first partitioning fish trap mesh. The second partitioning fish trap mesh may be formed with at least one second fish passage hole.

The first fish passage hole may be formed to be larger than the second fish passage hole.

The fish trap may further include at least one partitioning fish trap mesh interposed between the first fish trap mesh and the escape prevention part.

The partitioning fish trap mesh may include: a first partitioning fish trap mesh disposed at a position adjacent to escaper prevention part and having a first fish passage hole; and a second partitioning fish trap mesh disposed at a position adjacent to the first fish trap mesh and having a second fish passage hole. The first fish passage hole may be formed to be larger than the second fish passage hole.

The fish trap may further include: a second fish storage portion formed by the escape prevention part, the first partitioning fish trap mesh, the second fish trap mesh, and the third fish trap mesh; a second fish storage portion formed by the first partitioning fish trap mesh, the second partitioning fish trap mesh, the second fish trap mesh, and the third fish trap mesh; and a third fish storage portion formed by the first fish trap mesh, the second partitioning fish trap mesh, the second fish trap mesh, and the third fish trap mesh.

The second and third fish storage portions may be formed with first and second division partitions, respectively, that divide an internal space therein.

The first and second division partitions may further include first and second passage holes, respectively, through which a trapped fish passes.

The first passage hole may be formed to be larger than the second passage hole.

Further, the fish trap according to one embodiment may further include a door unit configured to open and close an internal space portion formed by the fish trap mesh. The door unit may include: a door frame coupled to the fish trap mesh; a door member installed in the door frame so as to be openable and closable and having a central portion formed of a mesh; a locker configured to regulate an opening/closing operation of the door frame and the door member; and a string member connected to the door member at one end and connected to the frame at an opposite end such that a tension is tightly applied to the string member at a closed position of the door member. The door member may be opened when the tension of the string member is released.

Alternatively, the fish trap may further include a door unit configured to selectively open and close an internal space portion of the first to third fish storage portions. The door unit may include: a door frame coupled to the fish trap mesh; a door member installed in the door frame so as to be openable and closable and having a central portion formed of a mesh; a locker configured to regulate an opening/closing operation of the door frame and the door member; and a string member connected to the door member at one end and connected to the frame at an opposite end such that a tension is tightly applied to the string member at a closed position of the door member. The door member may be opened when the tension of the string member is released.

The fish trap may further include an auxiliary door unit installed inside the door unit and configured to individually open and close each of the internal space portions of the first to third fish storage portions. The auxiliary unit may include: a first auxiliary door unit installed at the first fish storage portion of any one of the second fish trap mesh or the third fish trap mesh; a second auxiliary door unit installed at the second fish storage portion of any one of the second fish trap mesh or the third fish trap mesh; and a third auxiliary door unit installed at the third fish storage portion of any one of the second fish trap mesh or the third fish trap mesh.

The first auxiliary door unit may include: a first door frame having a first fish discharge hole formed at a central portion thereof; a first door member installed in the first door frame so as to be openable and closable; and a first locker configured to regulate an opening/closing operation of the first door frame and the first door member.

The second auxiliary door unit may include: a second door frame having a second fish discharge hole formed at a central portion thereof; a second door member installed in the second door frame so as to be openable and closable; and a second locker configured to regulate an opening/closing operation of the second door frame and the second door member.

The third auxiliary door unit may include: a third door frame having a third fish discharge hole formed at a central portion thereof; a third door member installed in the third door frame so as to be openable and closable; and a third locker configured to regulate an opening/closing operation of the third door frame and the third door member.

The first to third auxiliary door units may be formed in different sizes.

Further, the fish trap according to one embodiment may further include first and second foreign matter prevention units coupled to the first and second frames, respectively.

The first foreign matter prevention unit may include a first foreign matter prevention frame formed to be smaller than the first frame, and a first foreign matter prevention fish trap mesh coupled to the first foreign matter prevention frame. The second foreign matter prevention unit may include a second foreign matter prevention frame formed to be smaller than the second frame, and a second foreign matter prevention fish trap mesh coupled to the second foreign matter prevention frame.

The first foreign matter prevention frame may be connected to the first frame by at least one connection member, and the second foreign matter prevention frame may be connected to the second frame by at least one connection member.

Further, the fish trap may further include a bait bag installed in at least one of the first foreign matter prevention unit or the second foreign matter prevention unit.

The bait bag may be integrally formed with the first or second foreign matter prevention fish trap mesh, and may be formed by tying a portion of the first or second foreign matter prevention fish trap mesh.

Further, at least one fixing unit may be installed in any one of first frame or the second frame.

The first to third fish trap meshes may be integrally formed.

The fish trap may further include at least one string interconnecting the third and fourth frames, and the string may be connected to the fourth fish trap mesh in the vicinity of the fish entrance of the fourth fish trap mesh.

### Effect of the Invention

Since the escape of trapped fish is prevented as much as possible, a catch of fish can be increased.

Further, since waste, jellyfish or the like floating in water are prevented from flowing into the fish trap, it is possible to prevent contaminants, such as waste or the like, from flowing into the fish trap, and it is also possible to prevent a catch of fish from being reduced by jellyfish or the like.

Further, when a bait or the like is provided at the entrance side, fish can be guided to the entrance of the fish trap more efficiently, thus improving a trapping efficiency.

Furthermore, it is possible to easily discharge the fish stored in the fish trap, and it is possible to shorten a work time and improve labor productivity by reducing unnecessary labor in sorting and collecting fish.

### BRIEF DESCRIPTION OF THE DRAWINGS

FIG. 1 shows a schematic configuration of a spring fish trap according to a prior art technology.
FIG. 2 is a view schematically showing a usage example of the spring fish trap according to a prior art technology.
FIG. 3 shows an example of a cylindrical fish trap according to one embodiment.
FIG. 4 shows an example of a rectangular fish trap according to one embodiment.
FIG. 5 shows an example of a conical fish trap according to one embodiment.
FIG. 6 shows a cylindrical fish trap provided with a pair of luring parts according to one embodiment.
FIG. 7 shows a conical fish trap provided with a plurality of luring parts according to one embodiment.
FIG. 8 shows another embodiment of the cylindrical fish trap according to one embodiment wherein a luring opening of a luring part is disposed inside an escape prevention part.
FIG. 9 shows another embodiment of FIG. 8 wherein a luring opening of a luring part is disposed inside an escape prevention part having a plurality of outlets in a polygonal fish trap.
FIGS. 10 and 11 show other embodiments of FIG. 8 wherein a plurality of luring parts are formed in a conical fish trap and the plurality of luring openings are disposed inside one escape prevention part.
FIGS. 12 to 20 are views showing various embodiments wherein the installation positions of escape prevention parts installed in an internal space of a spring fish trap are changed in various ways.
FIG. 21 shows a spring fish trap according to one embodiment wherein an escape prevention part having a plurality of outlets is installed.
FIG. 22 shows a pair of luring parts and an escape prevention part shown in FIG. 21.
FIG. 23 is a development view of an escape prevention part according to one embodiment.
FIG. 24 shows a spring fish trap according to one embodiment wherein a foreign matter prevention unit is installed.
FIG. 25 shows a spring fish trap according to one embodiment wherein a fish storage portion is separated by using a plurality of partitions.
FIG. 26 is a sectional view of FIG. 25.
FIG. 27 shows a spring fish trap according to one embodiment wherein a fish storage portion is separated by using a plurality of partitions and division partitions.
FIGS. 28 and 29 are views of FIG. 27.
FIG. 30 is an enlarged view of a main part of FIG. 28.
FIG. 31 shows in a spring fish trap according to one embodiment wherein a door unit is installed.
FIG. 32 shows a configuration of a door unit of FIG. 31.
FIG. 33 shows an opening/closing operation of the door unit of FIG. 31.
FIG. 34 shows a method of collecting fish according to the opening/closing operation of the door unit of FIG. 31.
FIG. 35 shows a spring fish trap according to one embodiment wherein an auxiliary door unit is installed in each of a plurality of fish storage portions and a door unit is installed to entirely cover the auxiliary door units installed in the respective fish storage portions.
FIG. 36 shows a configuration of a door unit of FIG. 35.
FIG. 37 shows a conical fish trap according to one embodiment wherein a partition partitioning a fish storage portion is installed.
FIG. 38 shows a conical fish trap according to one embodiment wherein a pair of luring parts are provided and a door unit for collection is installed.
FIG. 39 shows a polygonal column shaped fish trap according to one embodiment wherein a pair of luring parts are provided and a foreign matter prevention unit is installed at an entrance.
FIG. 40 shows a conical fish trap according to one embodiment wherein an escape prevention part, a plurality of partitioning fish trap meshes, a door unit and a foreign matter prevention unit are installed.

### MODES FOR CARRYING OUT THE INVENTION

Hereinafter, the present invention will be described with reference to accompanying drawings.

Hereinafter, detailed descriptions are made as to embodiments according to the present invention with reference to the accompanying drawings. With regard to descriptions to the embodiments, the sizes and shapes of the components shown in the drawings may be exaggerated for clarity and convenience of explanation. Further, terms specially defined in consideration of a configuration and function of the present invention may be changed depending upon a user's or operator's intention or a custom. The definitions of these terms should be interpreted in meanings and concepts consistent with the technical idea of the present invention based on the contents of the entire specification.

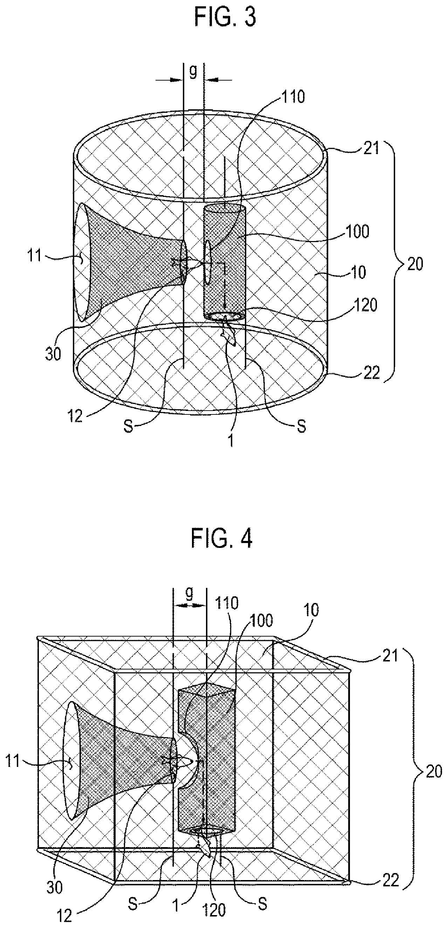

FIG. 3 shows an example of a cylindrical fish trap according to one embodiment.

As shown, a fish trap may include a fish trap mesh 10, a frame 20, a luring part 30, and an escape prevention part 100.

The fish trap mesh 10 may be provided in a net shape. According to this embodiment, the fish trap mesh 10 may be supported by the frame 20 to form an internal space portion. For example, as shown in FIG. 3, the ends of the fish trap mesh 10 may be connected to a ring-shaped frame 20 to form a cylindrical fish trap, thereby forming a space portion in which fish 1 can be trapped. The fish trap mesh 10 may be formed with an entrance 11 and an luring opening 12. The fish 1 flows in through the entrance 11. The fish 1 flows into the internal space portion after passing through the entrance 11. At this time, the luring opening 12 may be tied and fixed to the top side and the bottom side of the fish trap mesh 10 using a string member S for position fixing. This will be described again below.

The frame 20 may include first and second ring-shaped frames 21 and 22. The frame 20 may be formed of a metallic material, and may be coated with a resin material in order to prevent corrosion or the like. Alternatively, the frame may be formed of various materials, such as a synthetic resin, instead of a metallic material.

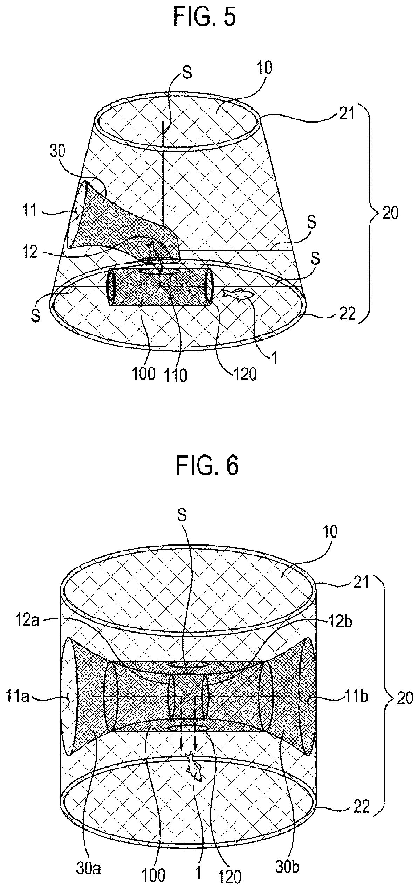

Further, the first and second frames 21 and 22 may be provided in ring shapes having a same diameter as shown in FIG. 3, or may be provided in a rectangular shape as shown in FIG. 4. As shown in FIG. 5, the first and second frames 21 and 22 may have different diameters. The shapes of the frames may be changed variously depending upon usage environments of the fish trap. Since the frame 20 is coupled to the fish trap mesh 10 to form a framework of the fish trap, the frame 20 may be changed into various shapes as necessary. Accordingly, the shapes of the first and second frames 21 and 22 can be changed to various shapes, such as a circular shape, a triangular shape, a rectangular shape, a polygonal shape, etc.

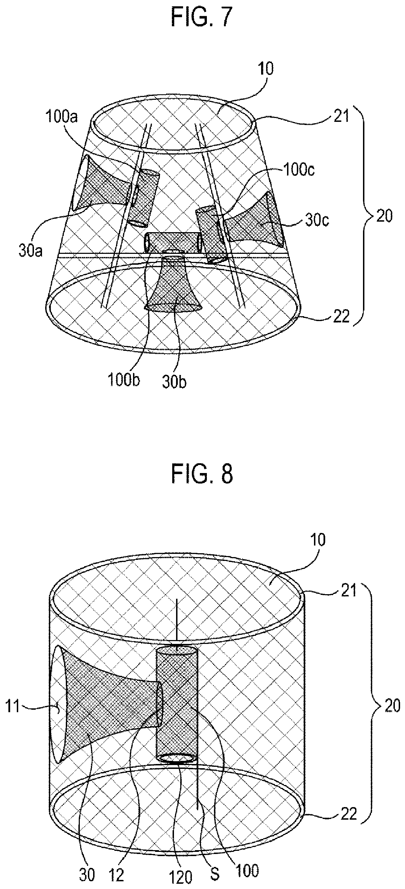

The luring part 30 may be formed to extend from the entrance 11 of the fish trap mesh 10 in a direction toward the inside of the frame 20, and may include the luring opening 12. As shown in FIGS. 3 to 5, one luring part 30 may be formed on one side wall, but the location of the luring part is not limited thereto. That is, as shown in FIG. 6, a pair of luring parts 30a and 30b may be disposed opposite to each other, and, as shown in FIG. 7, a plurality of luring parts 30a, 30b, and 30c may also be provided. The number of the luring parts 30 may vary depending on the size of the fish trap, and may also be determined depending on the size of fish to be trapped.

As shown in FIG. 3, the luring part 30 may be connected to the entrance 11 formed in one side wall of the fish trap mesh 10, and the luring opening 12 may be configured with a diameter that is smaller than that of the entrance 11 and may be formed to narrow gradually. The fish 1 can be lured to the inside of the fish trap through the luring part 30.

This embodiment is characterized in that the escape prevention part 100 is provided inside the fish trap so as to prevent the already-trapped fish 1 from escaping to the outside of the trap.

The escape prevention part 100 may form an isolated space, and may be provided with at least one fish passage hole 110 and an outlet 120. The fish 1, which has passed through the luring opening 12 of at least one luring part 30 configured as described above, passes through the fish passage hole 110.

By way of example, as shown in FIG. 3, the escape prevention part 100 may be spaced apart from the luring part 30 by a predetermined distance g. At this time, since the distance g is formed to be smaller than the size of the fish 1, the fish that has passed through the luring opening 12 does not escape through such a gap. Even if the fish 1 were to escape, it is not a significant issue because the fish 1 is inside the fish trap. As shown, the fish 1, which has flowed in through the luring part 30, may pass through the luring opening 12 and then flow into the internal space portion of the escape prevention part 100 through the fish passage hole 110, and therefore may be received in the inside of the fish trap through the outlet 120.

Further, the escape prevention part may have various shapes. The escape prevention part 100 may be provided in a substantially cylindrical shape as shown in FIG. 3. As shown in FIG. 3, a pair of ring-shaped frames is provided with a mesh formed on the frames, and the fish passage hole 110 is formed in a side wall with an outlet 120 formed in any one of the top and bottom sides. At this time, the escape prevention part 100 may be tied with and assembled to the fish trap mesh 10 by using at least one string member S, a bar, or the like.

As shown in FIGS. 3 and 4, the escape prevention part 100 may be installed by erecting it upright in a direction perpendicular to the fish travel direction of the luring part 30. As shown in FIG. 5, the escape prevention part 100 may be placed to be horizontal to the ground surface, but perpendicular to the fish travel direction. The position where the escape prevention part 100 is disposed may be changed variously depending on the structure and design of the fish trap.

FIG. 6 shows an example in which a pair of luring parts 30a and 30b is provided in the cylindrical fish trap according to an embodiment. In this example, the luring parts 30a and 30b may be provided with a first entrance 11a and a first luring openings 12a, respectively, and a second outlet 11b and a second luring opening 12b, respectively. The first entrance and the second entrance may have the same shape and be disposed symmetrically, and the first luring opening and the second luring opening may have the same shape and be disposed symmetrically, but they are not limited thereto, and, if necessary, may be disposed at various positions.

Further, the escape prevention part 100 may be disposed to entirely surround a portion of one of the pair of luring parts 30a and 30b to a portion of the other of the pair of luring parts 30a and 30b. That is, as shown in FIG. 6, the first and second luring openings 12a and 12b are disposed opposite to each other, and the first and second luring openings 12a and 12b may be connected to each other by a string member S to be fixed in position. The escape prevention part 100 may be formed by surrounding the periphery of the first and second luring openings 12a and 12b with a mesh member. At this time, the outlets 120 of the escape prevention part 100 may be disposed at positions perpendicular to the first and second luring openings 12a and 12b. In addition, at least one outlet 120 may be formed.

That is, as shown in FIG. 7, a plurality of luring parts 30a, 30b, and 30c may be formed in the fish trap, and each of the luring parts 30a, 30b, and 30c may be provided with the escape prevention parts 100a, 100b, and 100c configured as described above.

On the other hand, as shown in FIG. 8, the escape prevention part 100 may be installed such that the luring opening 12 of the luring part 30 is disposed inside the escape prevention part. In this case, instead of the above-described fish passage hole 110 (*see e.g.,* FIG. 3), the luring opening 12 may be directly inserted into the side wall of the escape prevention part 100 to be disposed in the internal space of the escape prevention part 100.

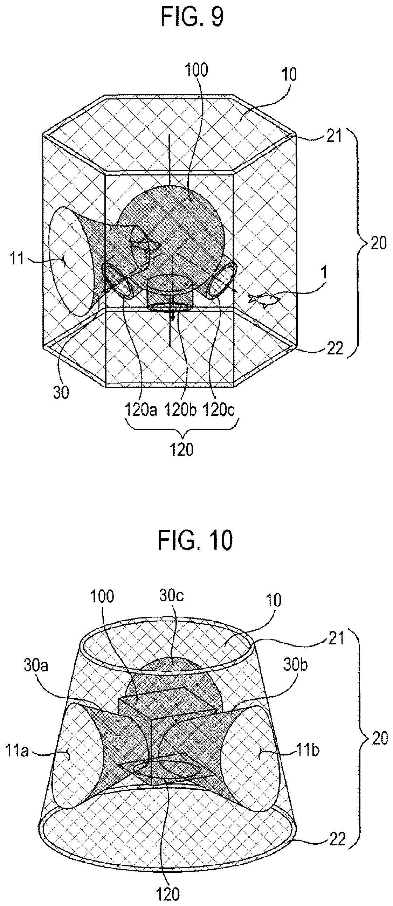

Further, as shown in FIG. 9, one luring part 30 may be provided, and the escape prevention part 100 having a spherical shape may have a plurality of outlets 120a, 120b, and 120c.

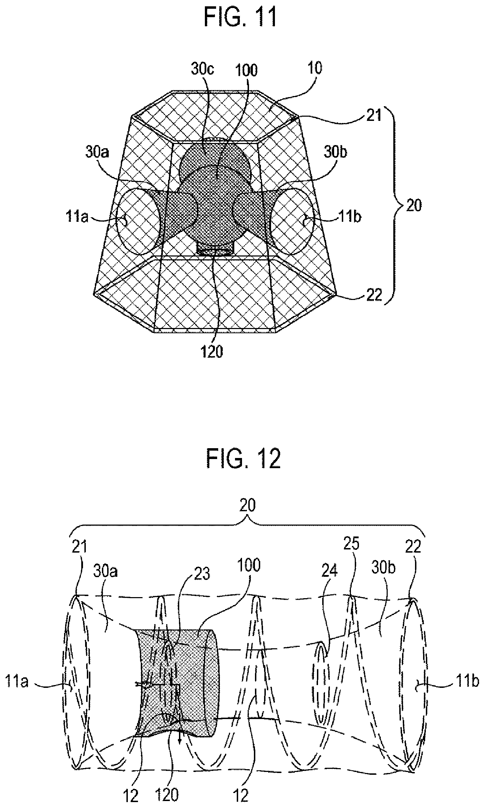

On the other hand, as shown in FIGS. 10 and 11, a plurality of luring parts 30a, 30b, and 30c may be provided, and, similar to the embodiment of FIG. 8, the ends of the luring parts 30a, 30b, and 30c may be directly disposed in the internal space portion of the escape prevention part 100. In this case, it is also possible to form only one outlet 120 of the escape prevention part 100 and to dispose the outlet 120 to face the bottom side. At this time, the first and second frames 21 and 22 may have a circular shape or may have a polygonal shape. In addition, as shown, the second frame 22 may be formed to be larger than the first frame 21 so that the bottom side of the fish trap naturally faces downward when the fish trap is thrown into water. By forming the second frame 22 to have a larger size as described above, the bottom side may easily face downward in the water due to its own weight, and may not be easily turned upside down by a stream of water.

According to such a configuration, the escape prevention part 100 inhibits the trapped fish 1 from entering the luring opening 12, which is the only place where the trapped fish 1 can escape from inside of the fish trap. In particular, the outlet 120 of the escape prevention part 100 and the fish passage hole 110 are formed to be perpendicular to each other. Thus, it is not easy for the fish 1 having poor eyesight to accurately proceed to the luring opening 12 through the outlet 120 and the fish passage hole 110. Therefore, it is possible to prevent fish from escaping through the luring opening 12 once the fish has been trapped.

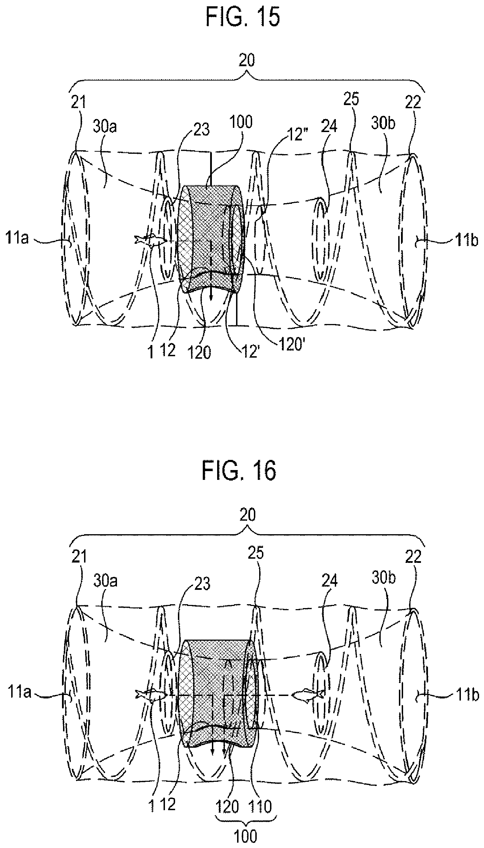

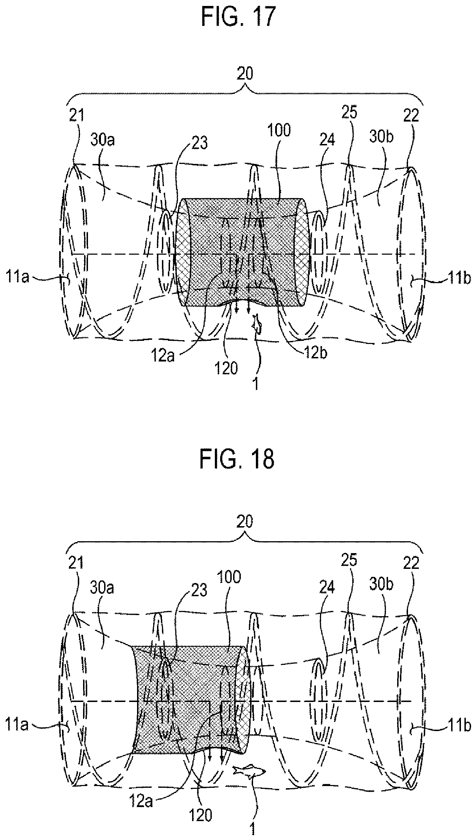

FIGS. 12 to 20 show an example of a spring fish trap.

As shown, the spring fish trap may include a fish trap mesh 10, a plurality of frames 20, and a pair of luring parts 30a and 30b disposed to be opposite to each other on the frames 20.

The frame 20 may include first to fourth frames 21 to 24 and a coil frame 25.

The first and second frames 21 and 22 may be disposed opposite to each other. The third and fourth frames 23 and 24 may be disposed opposite to each other between the first and second frames 21 and 22 in a state of being spaced apart from each other by a predetermined distance. On the other hand, the coil frame 25 may be coupled to the first frame 21 at one end and may be coupled to the second frame 22 at the opposite end, thus spacing the first and second frames 21 and 22 apart from each other by a predetermined distance.

Further, the diameters of the first and second frames 21 and 22 may be larger than the diameters of the third and fourth frames 23 and 24 such that the luring parts 30a and 30b may be formed to narrow gradually toward the inside of the fish trap.

According to this embodiment, the fish trap is characterized in that the escape prevention part 100 is provided such that the fish 1 cannot escape once the fish flows into the inside of the fish trap. The escape prevention part 100 is coupled in various ways as shown in FIGS. 12 to 20.

That is, as shown in FIG. 12, the fish, which has passed through the luring opening 12 formed at an end or a bottom side of the luring part 30a, flows into the internal space of the escape prevention part 100, and may then be received in the internal space of the fish trap mesh 10 through the outlet 120. At this time, since the escape prevention part 100 is formed to surround a portion of the luring part 30a of the fish trap into which the fish flows, the fish cannot easily escape from a place where the fish has entered the fish trap.

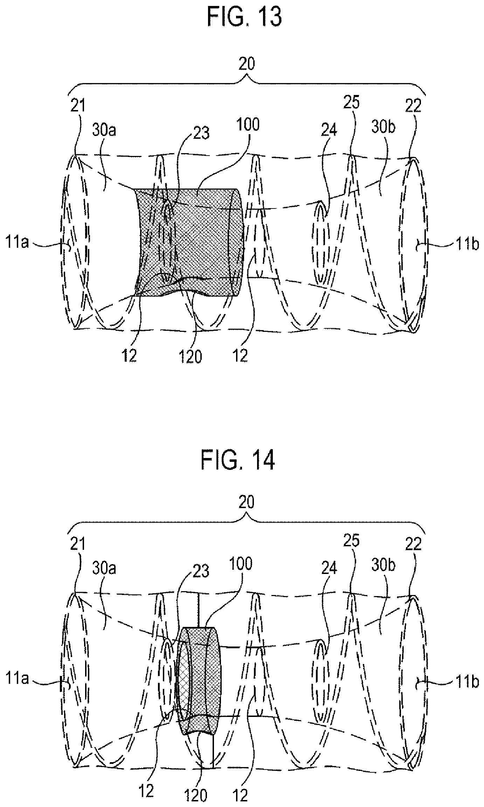

FIGS. 13 to 20 show other examples in which the size of the escape prevention part 100 is adjusted such that the escape prevention part 100 includes a portion of the luring part 30a. In this case, the fish, which has passed the luring openings 12 and 12', can flow into the inside of the fish trap through the outlets 120 and 120', respectively, and the escape prevention part 100 can prevent the lured fish from escaping through the entrances 11a and 11b.

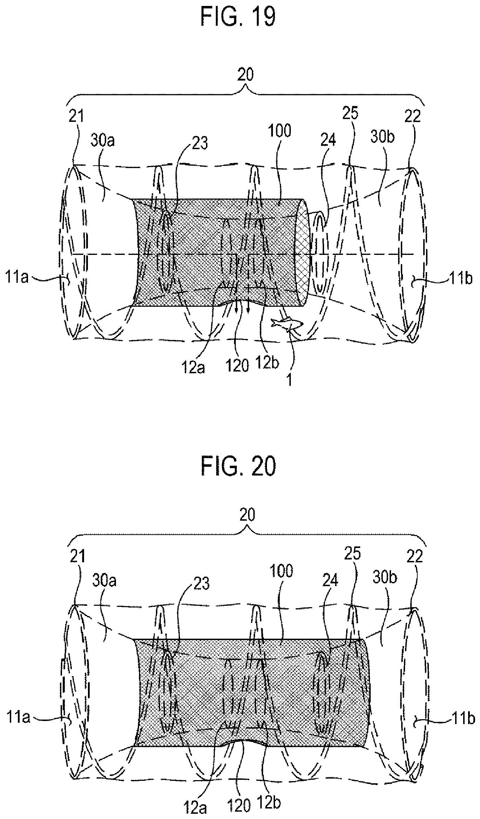

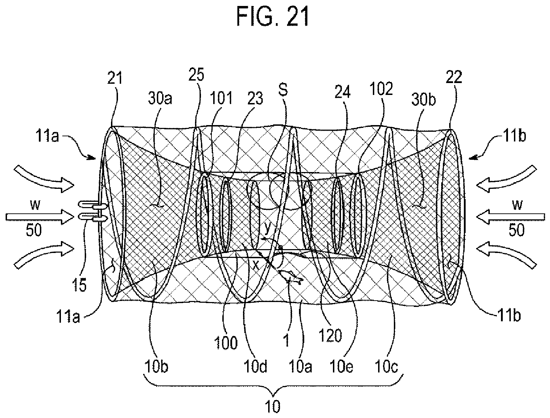

Further, as shown in FIGS. 20 and 21, the first luring part 30a is connected to the first frame 21 at one end and is connected to the third frame 23 at an opposite end. The second luring part 30b is connected to the second frame 22 at one end and is connected to the fourth frame 24 at an opposite end.

At this time, the frame 20 may be configured with the first to fourth frames 21 to 24 and the coil frame 25. The fish trap mesh 10 may include: a fish trap mesh 10a coupled to the frame 20 to form the exterior of the fish trap; a second fish trap mesh 10b coupled to the first frame 21 at one end and coupled to the third frame 23 at an opposite end; a third fish trap mesh 10c coupled to the second frame 22 at one end and coupled to the fourth frame 24 at an opposite end; and fourth and fifth fish trap meshes 10d and 10e, each of which has a luring opening 12, through which the fish 1 passes, at an end.

In this case, a portion of each of the first and second luring parts 30a and 30b, which include first and second entrances 11a and 11b, respectively, may be surrounded by the escape prevention part 100. To this end, the third and fourth frames 23 and 24 may be disposed in the inner region of the escape prevention part 100. That is, one end of the escape prevention part 100 may be connected to the second fish trap mesh 10b and the opposite end of the escape prevention part 100 may be connected to the third fish trap mesh 10c, thereby surrounding a portion of each of the second and third fish trap meshes 10b and 10c and the entire peripheries of the fourth and fifth fish trap meshes 10d and 10e.

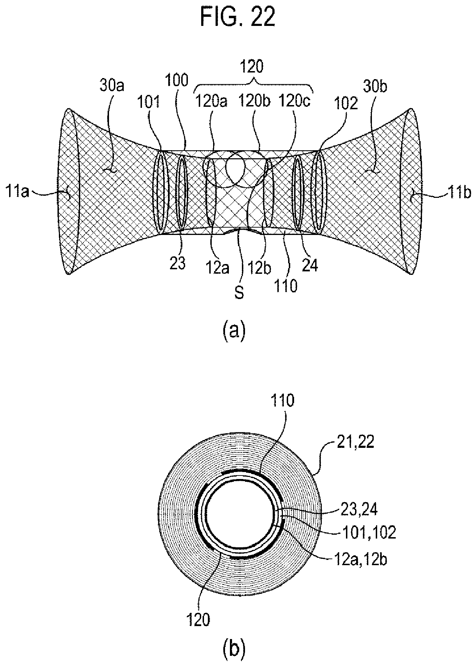

Further, as shown in FIGS. 21 and 22, in one embodiment, the escape prevention part 100 may further include fifth and sixth frames 101 and 102 in order to prevent fish from escaping from the fish trap. One end of the escape prevention part 100 is coupled to the fifth frame 101, and the opposite end of the escape prevention part 100 is coupled to the sixth frame 102. The fifth frame 101 and the sixth frame 102 may be provided substantially in a ring shape. The second fish trap mesh 10b and the fifth frame 101 may be coupled to each other, and the third frame 10c and the sixth frame 102 may be coupled to each other. The fifth and sixth frames 101 and 102 may have a width that is smaller than that of the first and second frames 21 and 22 and that is greater than or equal to that of the third and fourth frames 23 and 24, and may be disposed opposite to each other. Accordingly, both the first and second luring openings 12a and 12b may be disposed in the internal space portion of the escape prevention part 100, and the fish, which has passed through the first and second luring openings, can be received in the inside of the fish trap through the outlet 120.

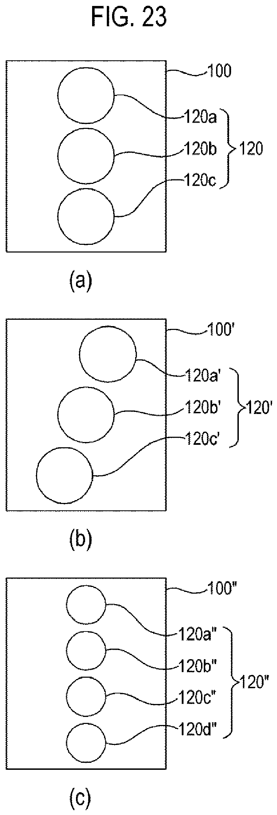

Further, a plurality of outlets 120a, 120b, and 120c may be formed through the escape prevention part 100. The arrangements of the plurality of outlets may be varied as shown in FIG. 23. The outlet 120 may have various shapes, such as a circular shape, an oval shape, a polygonal shape, and the like. At least three or more outlets 120 may be formed through the escape prevention fish trap mesh, which forms the escape prevention part 100.

That is, as shown in FIG. 23(a), the outlets 120 may be disposed such that a virtual extension line connecting respective centers is parallel with a virtual extension line that passes through the center of the escape prevention fish trap mesh. Alternatively, as shown in FIG. 23(b), the outlets 120' may be disposed such that a virtual extension line connecting respective centers forms a predetermined angle with the virtual extension line that passes through the center of the escape prevention fish trap mesh. Alternatively, it is also possible to provide four outlets 120" as shown in FIG. 23(c) and to arrange the outlets 120" as shown in FIG. 23(a).

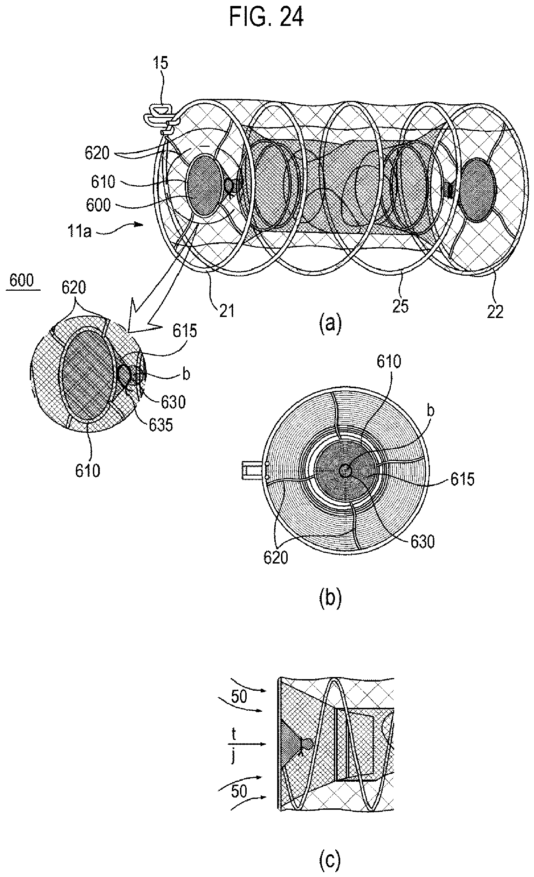

FIG. 24 shows a configuration in which a foreign matter prevention unit 600 is installed in the spring fish trap among the fish traps according to one embodiment. Since a pair of the foreign matter prevention units 600 having the same structure is coupled to the first and second frames 21 and 22 respectively, only one foreign matter prevention unit 600 may be described by way of an example.

The foreign matter prevention unit 600 may be connected to the foreign matter prevention frame 610 by a plurality of string members 620, and may be coupled to a foreign matter prevention fish trap mesh 615 to form a blocking partition. At this time, the foreign matter prevention frame 610 is smaller than the first frame 21. As shown in FIGS. 24(b) and 24(c), a bait bag b may be provided at an end of the foreign matter prevention mesh. The bait bag b may be formed by tying a portion of the foreign matter prevention fish trap mesh by means of, for example, a string 630. At this time, the string 630 may be formed with a knot 635 by using a string for tightening an onion net or the like. According to the above-described configuration, the fish can flow into the fish trap together with water through a space portion adjacent to and around the foreign matter prevention unit 600, and heavy wastes or foreign matters can be blocked by the foreign matter prevention unit 600, thus preventing the wastes or foreign matters from flowing into the inside through the entrance 11a.

Further, FIG. 24 shows a configuration in which the foreign matter prevention frame 610 is supported by a total of four string members 620. However, the number of connection members such as the string member 620, a bar, or the like may be changed if necessary without being limited thereto. In addition, the foreign matter prevention unit 600 may be configured to be positioned at the center or at a location offset to one side.

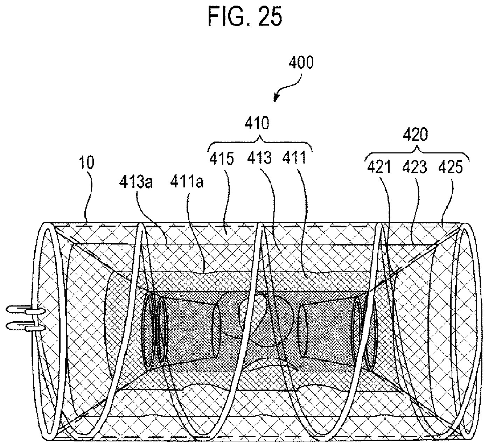

Further, as shown in FIGS. 25 to 30, the fish trap may further include at least one partitioning fish trap mesh 400, which is spaced apart from the outlet 120 by a predetermined distance and which is disposed between the outlet 120 and the fish trap mesh coupled to the frame 20 to divide the internal space of the fish trap.

As shown, the partitioning fish trap mesh 400 may include a fish storage portion 410 and a partition 420.

The fish storage portion 410 may include first to third fish storage portions 411, 413, and 415, each of which may store the fish 1 of a different size.

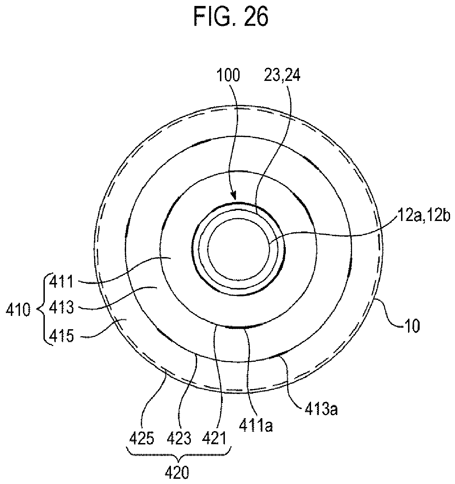

The partition 420 is provided such that fish of different sizes are separately received inside the fish storage portion 410, and may include first to third partitioning fish trap meshes 421, 423, and 425. Additionally, as shown in FIGS. 25 and 26, the first and second partitioning fish trap meshes 421 and 423 may be provided with first and second fish passage holes 411a and 413a, respectively. At this time, the first fish passage hole 411a may be formed to be larger than the second fish passage hole 413a. According to such a configuration, small fish among the fish that have passed the outlet 120 can escape to the third fish storage portion 415 formed at the outermost side. Thus, it is possible to prevent big fish from eating the small fish within the fish trap, thereby preventing reduction in the amount of fish that have been caught.

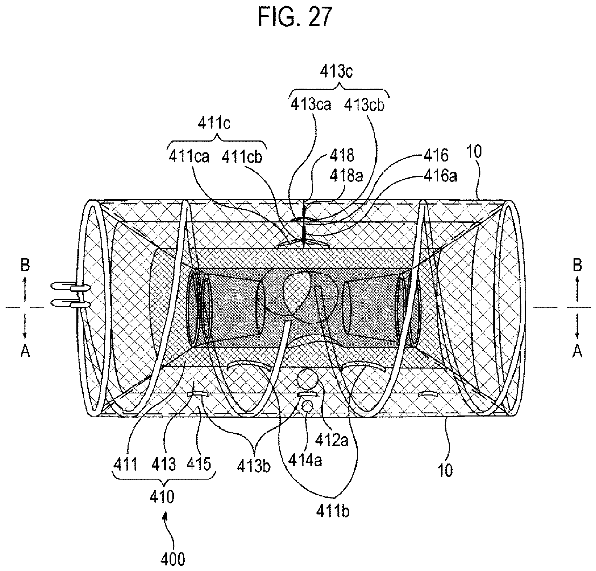

In addition, as shown in FIG. 27, first and second division partitions 416 and 418 dividing an internal space may be formed in the second and third fish storage portions 413 and 415, respectively. Further, as shown, the first and second partitioning fish trap meshes 421 and 423 may be provided with a plurality of the first fish passage holes 411a and a plurality of the second fish passage holes 413a, respectively.

The first and second division partitions 416 and 418 may be formed to be larger than the first and second passage holes 416a and 418a, respectively, through which the trapped fish passes.

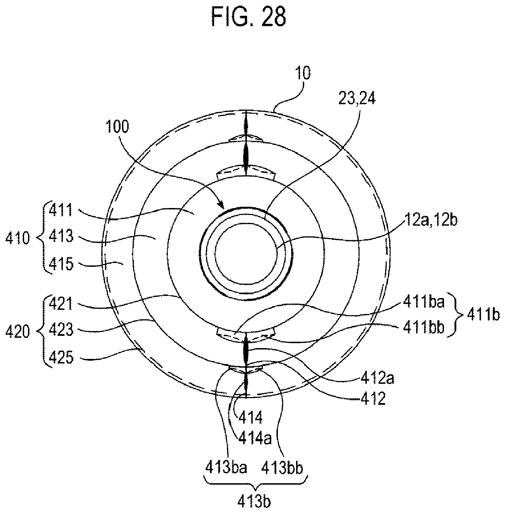

Further, as shown in FIG. 28, division partitions 412 and 414 may be formed in the fish storage portions 411, 413, and 415 in a direction parallel to a longitudinal direction of the fish trap, and first and second passage holes 412a and 414a may be formed in the division partitions 412 and 414, respectively. The sizes of the first and second passage holes 412a and 414a may be different from each other. For example, the size of the first passage hole 412a may be larger than that of the second passage hole 414a.

Further, as shown in FIG. 28, the first partitioning fish trap mesh 421 may be formed with a first fish guide passage hole 411b and a second fish guide passage hole 413b. The first guide passage hole 411b includes first and second guide passage holes 411ba and 411bb with the division partition 412 located therebetween. The second fish guide passage hole 413b includes third and fourth guide passage holes 413ba and 413bb. The size of the second fish guide passage hole 413b may be smaller than that of the first fish guide passage hole 411b in order to allow smaller fish to be stored toward the outermost side.

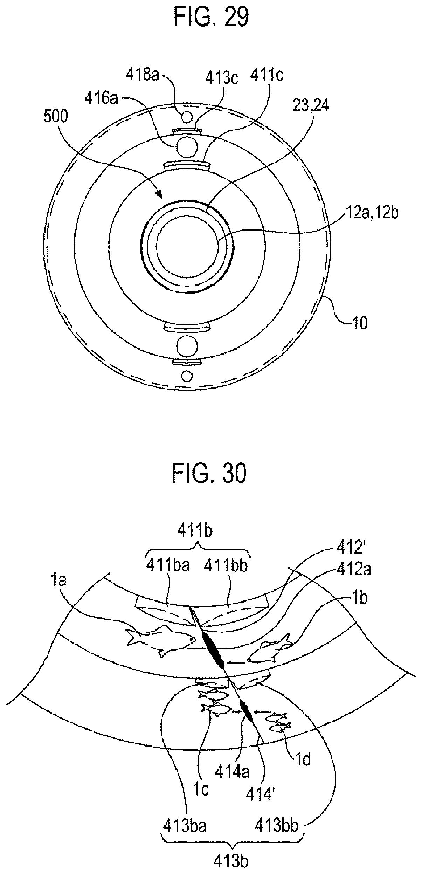

FIG. 29 shows a configuration in which a blocking partition 500 is formed in a direction perpendicular to the longitudinal direction of the above-described fish trap and first and second passage holes 416a and 418a of circular shapes are formed in different sizes through the first and second division partitions 416 and 418, respectively. The first passage holes 416a may be formed to be larger than the second passage holes 418a. In addition, a first fish guide passage hole 411c may be formed in the first partitioning fish trap mesh 421, and a second fish guide passage hole 413c may be formed in the second partitioning fish trap mesh 423. The first fish guide passage hole 411c and the second fish guide passage hole 413c may be configured to have different sizes such that only small fish can move outwardly.

FIG. 30 shows a state where fish 1a and fish 1b having different sizes are separately accommodated according to the arrangement of the blocking partition 500 shown in FIG. 29.

As shown, the first fish guide passage hole 411b may be formed in the first partitioning fish trap mesh 421. The first fish guide passage hole 411b may be configured with first and second guide passage holes 411ba and 411bb having different sizes, so that fish can be separately disposed with the blocking partition 412' being interposed therebetween. In addition, a through hole 412a having a first diameter may be formed in the blocking partition 412' so that relatively small fish 1b can pass through the through hole 412a and relatively big fish 1a cannot pass through the through hole 412a.

Further, the second fish guide passage hole 413b may be formed in the second partitioning fish trap mesh 423. The second fish guide passage hole 413b may be configured with third and fourth guide passage holes 413ba and 413bb having different sizes, so that fish can be separately disposed with the blocking partition 414' being interposed therebetween. In addition, a through hole 414a having a second diameter may be formed in the blocking partition 414' so that relatively small fish 1d can pass through the through hole 414a and relatively big fish 1c cannot pass through the through hole 414a.

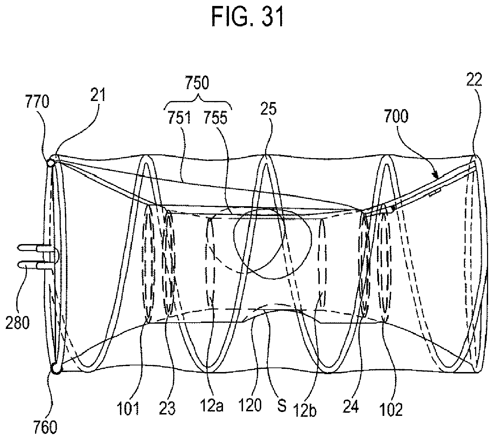

FIG. 31 schematically shows a configuration in which a door unit 700 is installed in a spring fish trap according to one embodiment. Since other configurations are the same as those described above, a redundant description will be omitted.

The door unit 700 may be installed at one end of the luring part 11b, and one end of the door unit 700 may be connected to a string member 750 such that the door unit 700 may be opened along with the contraction movement of the spring fish trap. The string member 750 can be hooked and fixed to a hook 760 which is formed in the first frame 21 and is located in the diagonal direction of a release prevention ring 770 through the release prevention ring 770. When the hook 760 is released from engagement with the first frame, the string member 750 coupled to the hook 760 may lose its tension such that a door portion 720 may be in an openable and closable state. Further, the release prevention ring 770 is not necessarily required. It is also possible that the string member 750 may be configured to be wound such that one end of the string member 750 is fixed to the first frame 21 or the third frame 23.

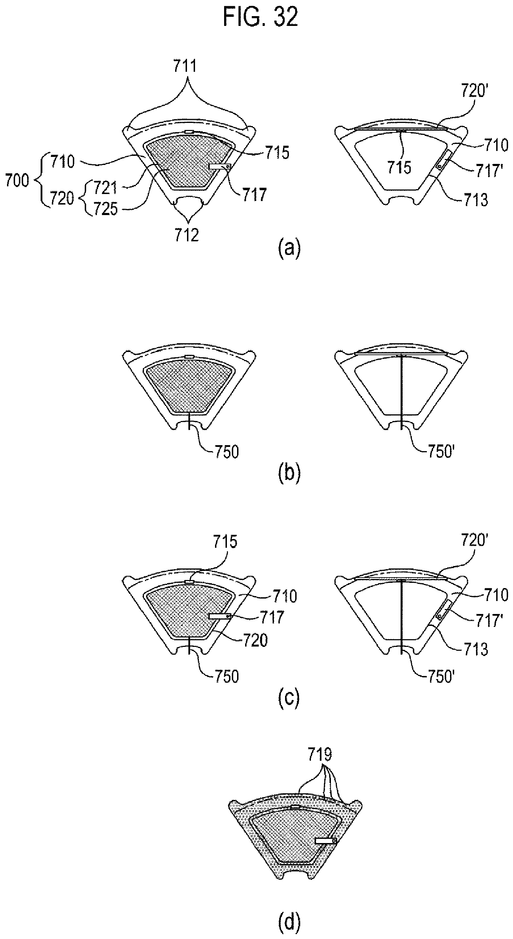

FIG. 32 is a view specifically showing the door unit 700 according to such an embodiment.

As shown, the door unit 700 may be divided into a frame portion 710 and a door portion 720.

At least a pair of fixing portions 711 and 712 may be provided in the frame portion 710, and the frame portion 710 may be fixed to both ends of the frame 20. Additionally, a through hole, which allows the door portion 720 to be opened/closed, may be formed in the vicinity of the center portion of the frame portion 710, and a locking device (or referred to as a locker) 717 may be installed to maintain the closed state of the door portion 720. The frame portion 710 may be provided with a hinge portion 715 such that the door portion 720 can be rotatably opened/closed.

The door portion 720 may include a door frame 721, which forms a periphery and has a through hole at a center portion, and a door mesh 725 coupled to the door frame 721. In addition, the string member 750 may be connected to the inside of the fish trap at one end of the door portion 720, preferably at a side opposite the hinge portion 715. Further, as shown, the above-described door unit 700 may be formed with a mesh structure 719 as a whole so that water can pass therethrough.

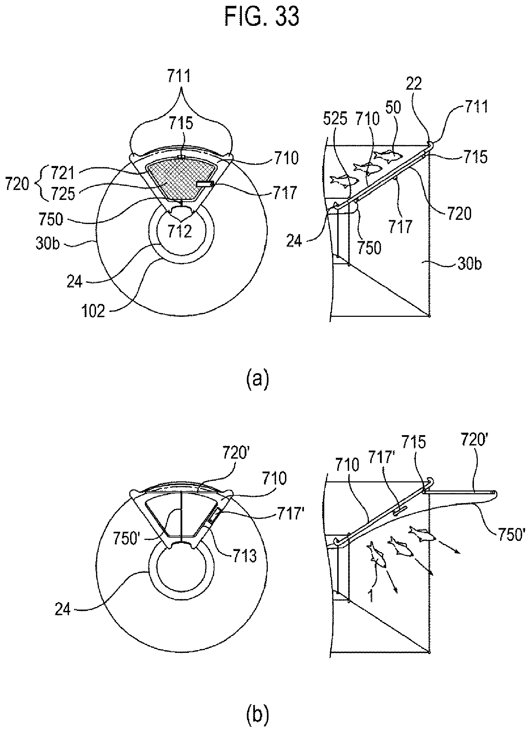

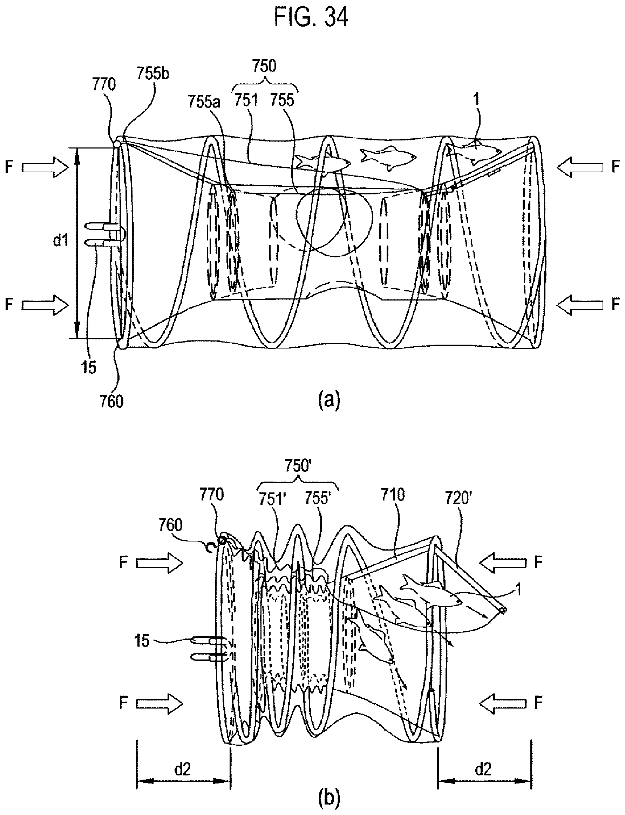

As shown in FIG. 33, in the door unit 700 according to this embodiment, the above-described fixing part 712 may be coupled to the fourth frame 24. Accordingly, the door unit 700 can selectively open and close the entire internal space portion of the fish trap. That is, one end of the string member 750' is coupled to the door portion 720 and the opposite end is connected to the first frame 21 as described above. Thus, if the fish trap is contracted by applying a force F in a direction indicated by arrows as shown in FIG. 34, the door portion 720 is in an openable state shown in FIG. 34(b) due to the release of the pulling force of the string member 750. Accordingly, the trapped fish 1 can be collected through the door unit 700.

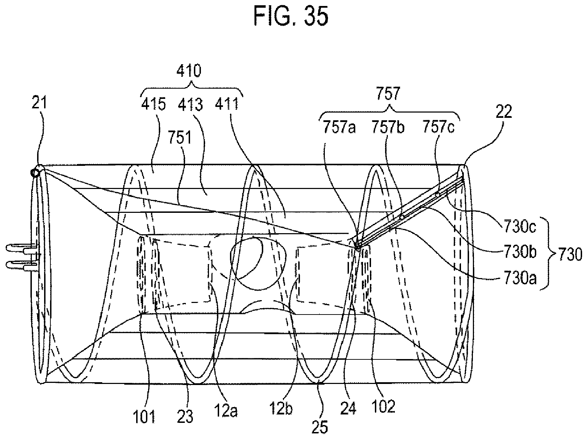

Further, as shown in FIG. 35, when the fish trap is provided with a plurality of fish storage portions, auxiliary door units for the respective fish storage portions 411, 413, and 415 may be individually installed inside the door unit 700.

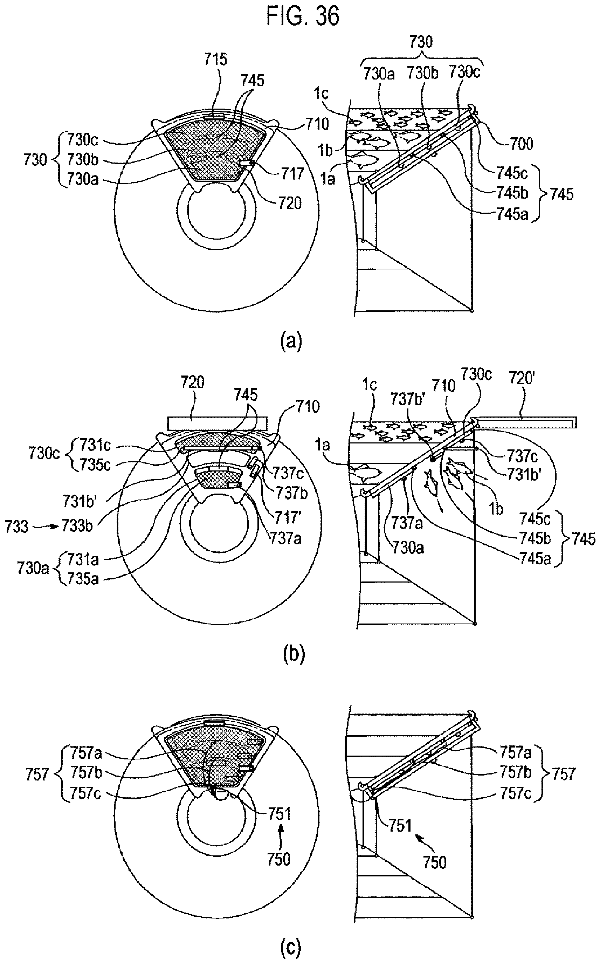

That is, as shown in FIGS. 35 and 36, the fish trap according to this embodiment may further include, inside the door unit 700, an auxiliary door unit 730 configured to open and close the first to third fish storage portions 411, 413, and 415, and a door portion 720 having the above-described configuration may be installed on the auxiliary door unit 730 so as to be pivotally opened/closed.

In FIG. 36, the auxiliary door unit 730 may be configured to include first to third auxiliary door units 730a, 730b, and 730c, and an auxiliary hinge portion 745 including first to third auxiliary hinge portions 745a, 745b, and 745c may be provided so as to allow the first to third auxiliary door units 730a, 730b, and 730c, respectively, to be pivotally openable and closable.

Further, the auxiliary door units 730 may also be provided with first to third locking devices 737a, 737b, and 737c, respectively, so as to maintain the closed state. The locking devices 737a, 737b, and 737c may have the same configuration as the above-described locking device 717. The locking devices described above may be provided as a lever type.

Additionally, when the outermost door portion 720 is not opened, the auxiliary door units 730 are not opened. Thus, even if the first to third locking devices 737a, 737b, and 737c are opened, the fish do not come out.

According to such configurations, the trapped fish 1 can be easily collected through the opening/closing of the door portion in comparison to conventional devices. That is, fish are sorted and trapped depending on different sizes. Thus, if the auxiliary door units 730 are selectively opened according to the size of the fish to be collected, the fish of one size can be collected at a time. Thus, it is possible to reduce the time required for the sorting work after the collection.

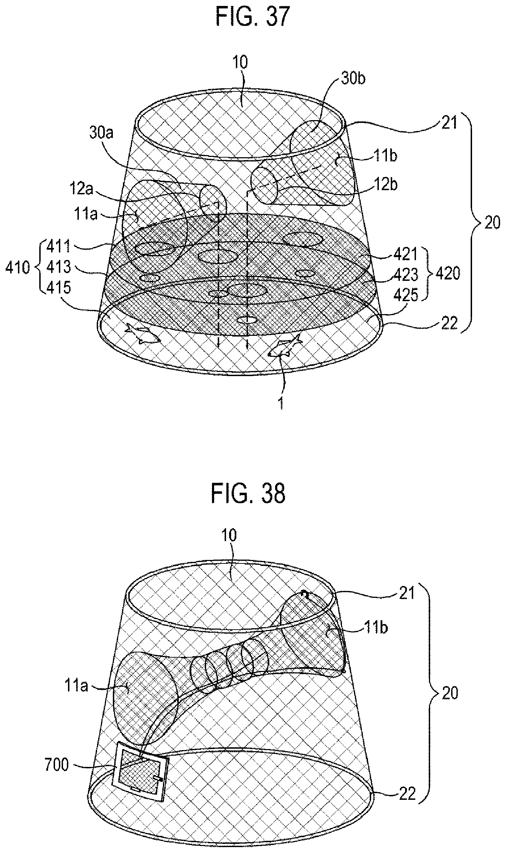

As variations of the above-described embodiments, FIG. 37 shows a configuration in which a partition for separately trapping fish of different sizes is additionally provided in a conical fish trap.

As shown, the first to third partitioning fish trap meshes 411, 413, and 415 may be further installed in the fish trap having a pair of entrances 11a and 11b. Further, as described above, the first and second partitioning fish trap meshes 411 and 413 may be formed with fish passage holes of different sizes. Accordingly, fish of different sizes can be stored in the first to third fish storage portions 421, 423, and 425, respectively.

FIG. 38 shows a fish trap of a conical shape to which the above-described door unit 700 is applied. The basic configuration and operation of the door unit 700 are the same as those described above. However, when the door unit 700 is opened through an action of releasing the hooking of the string member, the collection of fish trapped inside the fish trap is further simplified.

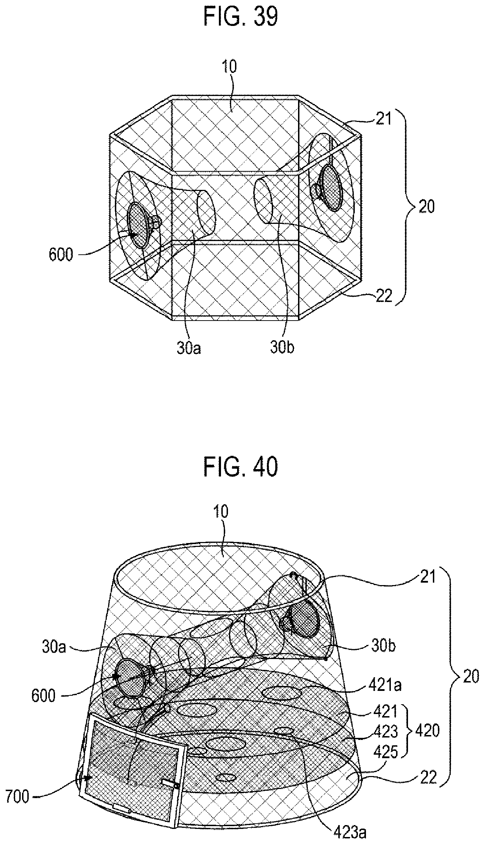

FIG. 39 shows a configuration in which the foreign matter prevention unit 600 is installed at the first and second luring parts 30a and 30b in a fish trap of a polygonal column shape. The configuration and effect are the same as those described above.

FIG. 40 shows a configuration in which a plurality of the above-described partitioning fish trap meshes and the above-described first to third fish storage portions 421, 423, and 425 are provided in a fish trap of a conical shape, and all of the escape prevention part 100, the foreign matter prevention unit 600, and the door unit 700 are provided, by way of an example. The configuration and operation are the same as those described above.

The embodiments of the present invention described hereinabove and shown in the drawings should not be construed as limiting the technical idea of the present invention. The scope of the present invention to be protected is limited only by the features described in the claims, and those of ordinary skill in the art may improve and modify the technical idea of the present invention in various forms. Accordingly, such improvements and modifications will fall within the scope of the present invention as long as the improvements and modifications are obvious to those of ordinarily skill in the art.

### (DESCRIPTION OF REFERENCE SYMBOLS)

1: fish, 11: mesh, 11: entrance, 12: luring opening, 20: frame, 21: first frame, 22: second frame, 30: luring part, 100: escape prevention part, 110: fish passage hole, 120: outlet

## Claims

1. A fish trap used for trapping fish, comprising:
a fish trap mesh formed with at least one entrance;
at least one frame supporting the fish trap mesh;
at least one luring part formed to extend from the entrance of the fish trap mesh in a direction toward an inside of the frame and including a luring opening; and
an escape prevention part forming an isolated space and provided with at least one fish passage hole through which a fish passes after passing through the luring opening of the at least one luring part.

2. The fish trap of Claim 1, wherein the escape prevention part is spaced apart from the luring part by a predetermined distance.

3. The fish trap of Claim 1, wherein each of the luring part and the escape prevention part is fixed in position to the fish trap mesh by at least one connection member.

4. The fish trap of Claim 1, wherein the luring part has the luring opening that is narrower than the entrance.

5. The fish trap of Claim 1, wherein the escape prevention part further includes at least one outlet through which the fish is discharged after the fish flows in through the fish passage hole.

6. The fish trap of Claim 1, wherein the escape prevention part is formed to surround a portion of the luring part.

7. The fish trap of Claim 1, wherein the frame includes:
a first fame disposed at an upper side; and
a second frame disposed to be spaced apart from the first frame by a predetermined distance, and
wherein the fish trap mesh is coupled to the first and second frames to form a top side, a bottom side, and a side wall of the fish trap.

8. The fish trap of Claim 7, wherein the first and second frames are formed in a corresponding size and shape.

9. The fish trap of Claim 7, wherein the first and second frames are formed in different sizes and shapes.

10. The fish trap of Claim 7, wherein the second frame is formed to be larger than the first frame.

11. The fish trap of Claim 7, wherein the first and second frames are formed in any one of a circular shape or a polygonal shape.

12. The fish trap of Claim 1, wherein the fish trap mesh is formed with a pair of entrances at one side and an opposite side located opposite to each other, and a pair of the luring parts are disposed opposite to each other.

13. The fish trap of Claim 1, wherein the frame includes:
first and second frames disposed opposite to each other;
third and fourth frames disposed opposite to each other between the first and second frames in a state of being spaced apart from each other by a predetermined distance, the third and fourth frames being formed to be smaller than the first and second frames; and
a coil frame connected to the first frame at one end and connected to the second frame at an opposite end, the coil frame biasing the first and second frames in a direction away from each other.

14. The fish trap of Claim 13, wherein the fish trap mesh includes:
a first fish trap mesh coupled to the first frame at one end and connected to the second frame at an opposite end;
a second fish trap mesh coupled to the first frame at one end and connected to the third frame at an opposite end;
a third fish trap mesh coupled to the second frame at one end and connected to the fourth frame at an opposite end; and
a fourth fish trap mesh connected to the third frame at one end and connected to the fourth frame at an opposite end, the fourth fish trap mesh having a cut portion at a vicinity of a center portion such that a fish entrance in close contact with the cut portion is formed when the fish trap is unfolded.

15. The fish trap of Claim 14, wherein the escape prevention part is connected to the second fish trap mesh at one end and is connected to the third fish trap mesh at an opposite end so as to surround a portion of the second and third fish trap meshes and the entirety of the fourth fish trap mesh.

16. The fish trap of Claim 14, further comprising:
a fifth frame coupled to the second fish trap mesh; and
a sixth frame coupled to the third fish trap mesh,
wherein the one end of the escape prevention part is coupled to the fifth frame and the opposite end of the escape prevention part is coupled to the sixth frame.

17. The fish trap of Claim 16, wherein the fifth and sixth frames have a width that is smaller than a width of the first and second frames and greater than or equal to a width of the third and fourth frames, and are disposed opposite to each other.

18. The fish trap of Claim 5, wherein the outlet has any one among a circular shape, an oval shape, and a polygonal shape.

19. The fish trap of Claim 5, wherein at least three outlets are formed through the escape prevention part.

20. The fish trap of Claim 19, wherein the outlets are disposed such that a virtual extension line connecting respective centers is parallel to a virtual extension line passing through a center of the escape prevention part.

21. The fish trap of Claim 19, wherein the outlets are disposed such that a virtual extension line connecting respective centers forms a predetermined angle with a virtual extension line passing through a center of the escape prevention part.

22. The fish trap of Claim 5, further comprising:
at least one partitioning fish trap mesh spaced apart from the outlet by a predetermined distance and disposed between the outlet and the fish trap mesh coupled to the frame to divide an internal space of the fish trap.

23. The fish trap of Claim 22, wherein the partitioning fish trap mesh includes at least one fish passage hole.

24. The fish trap of Claim 22, wherein the partitioning fish trap mesh includes:
a first partitioning fish trap mesh disposed at a position adjacent to the outlet to form a first fish storage portion, the first partitioning fish trap mesh having at least one first fish passage hole; and
a second partitioning fish trap mesh disposed to be spaced apart from the first partitioning fish trap mesh to form a second fish storage portion together with the first partitioning fish trap mesh, the second partitioning fish trap mesh being formed with at least one second fish passage hole.

25. The fish trap of Claim 24, wherein the first fish passage hole is formed to be larger than the second fish passage hole.

26. The fish trap of Claim 14, further comprising:
at least one partitioning fish trap mesh interposed between the first fish trap mesh and the escape prevention part.

27. The fish trap of Claim 26, wherein the partitioning fish trap mesh includes:
a first partitioning fish trap mesh disposed at a position adjacent to the escape prevention part and having a first fish passage hole; and
a second partitioning fish trap mesh disposed at a position adjacent to the first fish trap mesh and having a second fish passage hole,
wherein the first fish passage hole is formed to be larger than the second fish passage hole.

28. The fish trap of Claim 27, further comprising:
a first fish storage portion formed by the escape prevention part, the first partitioning fish trap mesh, the second fish trap mesh, and the third fish trap mesh;
a second fish storage portion formed by the first partitioning fish trap mesh, the second partitioning fish trap mesh, the second fish trap mesh, and the third fish trap mesh; and
a third fish storage portion formed by the first fish trap mesh, the second partitioning fish trap mesh, the second fish trap mesh, and the third fish trap mesh.

29. The fish trap of Claim 28, wherein the second and third fish storage portions are formed with first and second division partitions, respectively, that divide an internal space therein.

30. The fish trap of Claim 29, wherein the first and second division partitions further include first and second passage holes, respectively, through which a trapped fish passes.

31. The fish trap of Claim 30, wherein the first passage hole is formed to be larger than the second passage hole.

32. The fish trap of Claim 1, further comprising:
at least one door unit configured to open and close an internal space portion formed by the fish trap mesh,
wherein the door unit includes:
a door frame coupled to the fish trap mesh;
a door member installed in the door frame so as to be openable and closable and having a central portion formed of a mesh;
a locker configured to regulate an opening/closing operation of the door frame and the door member; and
a string member connected to the door member at one end and connected to the frame at an opposite end, a tension being tightly applied to the string member at a closed position of the door member, and
wherein the door member is opened when the tension of the string member is released.

33. The fish trap of Claim 28, further comprising:
a door unit configured to selectively open and close an internal space portion of the first to third fish storage portions,
wherein the door unit includes:
a door frame coupled to the fish trap mesh;
a door member installed in the door frame so as to be openable and closable and having a central portion formed of a mesh;
a locker configured to regulate an opening/closing operation of the door frame and the door member; and
a string member connected to the door member at one end and connected to the frame at an opposite end, a tension being tightly applied to the string member at a closed position of the door member, and
wherein the door member is opened when the tension of the string member is released.

34. The fish trap of Claim 33, further comprising:
an auxiliary door unit installed inside the door unit and configured to individually open and close each of the internal space portions of the first to third fish storage portions,
wherein the auxiliary door unit includes:
a first auxiliary door unit installed at the first fish storage portion of any one of the second fish trap mesh or the third fish trap mesh;
a second auxiliary door unit installed at the second fish storage portion of any one of the second fish trap mesh or the third fish trap mesh; and
a third auxiliary door unit installed at the third fish storage portion of any one of the second fish trap mesh or the third fish trap mesh.

35. The fish trap of Claim 34, wherein the first auxiliary door unit includes:
a first door frame having a first fish discharge hole formed at a central portion thereof;
a first door member installed in the first door frame so as to be openable and closable; and
a first locker configured to regulate an opening/closing operation of the first door frame and the first door member.

36. The fish trap of Claim 35, wherein the second auxiliary door unit includes:
a second door frame having a second fish discharge hole formed at a central portion thereof;
a second door member installed in the second door frame so as to be openable and closable; and
a second locker configured to regulate an opening/closing operation of the second door frame and the second door member.

37. The fish trap of Claim 36, wherein the third auxiliary door unit includes:
a third door frame having a third fish discharge hole formed at a central portion thereof;
a third door member installed in the third door frame so as to be openable and closable; and
a third locker configured to regulate an opening/closing operation of the third door frame and the third door member.

38. The fish trap of any one of Claims 1 to 37, further comprising:
a foreign matter prevention unit coupled between the entrance into which fish flows and the inside of the fish trap.

39. The fish trap of Claim 38, wherein the frame includes:
first and second frames disposed opposite to each other; and
third and fourth frames disposed opposite to each other between the first and second frames in a state of being spaced away from each other by a predetermined distance, the third and fourth frames being formed to be smaller than the first and second frames, and
wherein the foreign matter prevention unit includes first and second foreign matter prevention units that are coupled between the first frame and the third frame and between the second frame and the fourth frame, respectively.

40. The fish trap of Claim 39, wherein the first foreign matter prevention unit includes:
a first foreign matter prevention frame formed to be smaller than the first frame; and
a first foreign matter prevention fish trap mesh coupled to the first foreign matter prevention frame, and
wherein the second foreign matter prevention unit includes:
a second foreign matter prevention frame formed to be smaller than the second frame; and
a second foreign matter prevention fish trap mesh coupled to the second foreign matter prevention frame.

41. The fish trap of Claim 40, wherein the first foreign matter prevention frame is connected between the first frame and the third frame by at least one connection member, and
wherein the second foreign matter prevention frame is connected between the second frame and the fourth frame by at least one connection member.

42. The fish trap of Claim 40, further comprising:
a bait bag installed in at least one of the first foreign matter prevention unit or the second foreign matter prevention unit.

43. The fish trap of Claim 42, wherein the bait bag is integrally formed with the first or second foreign matter prevention fish trap mesh and is formed by tying a portion of the first or second foreign matter prevention fish trap mesh.

44. The fish trap of Claim 13, further comprising:
at least one fixing unit installed in any one of the first frame or the second frame.

45. The fish trap of Claim 14, wherein the first to third fish trap meshes are integrally formed.

46. The fish trap of Claim 14, further comprising:
at least one string interconnecting the third and fourth frames,
wherein the string is connected to the fourth fish trap mesh in the vicinity of the fish entrance of the fourth fish trap mesh.

47. A fish trap comprising:
first and second frames disposed opposite to each other;
third and fourth frames disposed opposite to each other between the first and second frames in a state of being spaced apart from each other by a predetermined distance, the third and fourth frames being formed to be smaller than the first and second frames;
a coil frame connected to the first frame at one end and connected to the second frame at an opposite end, the coil spring biasing the first and second frames in a direction away from each other;
a first fish trap mesh coupled to the first frame at one end and connected to the second frame at an opposite end;
a second fish trap mesh coupled to the first frame at one end and connected to the third frame at an opposite end;
a third fish trap mesh coupled to the second frame at one end and connected to the fourth frame at an opposite end;
a fourth fish trap mesh connected to the third frame at one end and connected to the fourth frame at an opposite end, the fourth fish trap mesh having a cut at a vicinity of a center portion such that a fish entrance in close contact with the cut portion is formed when the fish trap is unfolded; and
at least one partitioning fish trap mesh interposed between the first fish trap mesh and the fourth fish trap mesh.

48. The fish trap of Claim 47, wherein the partitioning fish trap mesh includes:
a first partitioning fish trap mesh disposed at a position adjacent to the fourth fish trap mesh and having a first fish passage hole; and
a second partitioning fish trap mesh disposed at a position adjacent to the first fish trap mesh and having a second fish passage hole, and
wherein the first fish passage hole is formed to be larger than the second fish passage hole.

49. The fish trap of Claim 48, further comprising:
a first fish storage portion formed by the fourth fish trap mesh, the first partitioning fish trap mesh, the second fish trap mesh, and the third fish trap mesh;
a second fish storage portion formed by the first partitioning fish trap mesh, the second partitioning fish trap mesh, the second fish trap mesh, and the third fish trap mesh; and
a third fish storage portion formed by the first fish trap mesh, the second partitioning fish trap mesh, the second fish trap mesh, and the third fish trap mesh.

50. The fish trap of Claim 49, further comprising:
a first auxiliary door unit installed at the first fish storage portion of any one of the second fish trap mesh or the third fish trap mesh;
a second auxiliary door unit installed at the second fish storage portion of any one of the second fish trap mesh or the third fish trap mesh;
a third auxiliary door unit installed at the third fish storage portion of any one of the second fish trap mesh or the third fish trap mesh; and
a door unit installed to entirely cover the first to third auxiliary door units.

51. The fish trap of Claim 50, wherein the first auxiliary door unit includes:
a first door frame having a first fish discharge hole formed at a central portion thereof;
a first door member installed in the first door frame so as to be openable and closable; and
a first locker configured to regulate an opening/closing operation of the first door frame and the first door member,
wherein the second auxiliary door unit includes:
a second door frame having a second fish discharge hole formed at a central portion thereof;
a second door member installed in the second door frame so as to be openable and closable; and
a second locker configured to regulate an opening/closing operation of the second door frame and the second door member, and
wherein the third auxiliary door unit includes:
a third door frame having a third fish discharge hole formed at a central portion thereof;
a third door member installed in the third door frame so as to be openable and closable; and
a third locker configured to regulate an opening/closing operation of the third door frame and the third door member.

52. A fish trap comprising:
first and second frames disposed opposite to each other;
third and fourth frames disposed opposite to each other between the first and second frames in a state of being spaced apart from each other by a predetermined distance, the third and fourth frames being formed to be smaller than the first and second frames;
a coil frame connected to the first frame at one end and connected to the second frame at an opposite end, the coil spring biasing the first and second frames in a direction away from each other;
a first fish trap mesh coupled to the first frame at one end and connected to the second frame at an opposite end;
a second fish trap mesh coupled to the first frame at one end and connected to the third frame at an opposite end;
a third fish trap mesh coupled to the second frame at one end and connected to the fourth frame at an opposite end;
a fourth fish trap mesh connected to the third frame at one end and connected to the fourth frame at an opposite end, the fourth fish trap mesh having a cut at a vicinity of a center portion such that a fish entrance in close contact with the cut portion is formed when the fish trap is unfolded; and
a door unit installed in at least one of the second fish trap mesh or the third fish trap mesh.

53. The fish trap of Claim 52, wherein the door unit includes:
a door frame having a fish discharge hole formed at a central portion thereof;
a door member installed in the door frame so as to be openable and closable; and
a locker configured to regulate an opening/closing operation of the door frame and the door member.

54. The fish trap of Claim 53, wherein the door unit further includes a string connected to the door member at one end and connected at an opposite end to one of the first and second frames in which the door unit is not installed, and
wherein a length of the string corresponds to an overall length of the fish trap.

55. A fish trap comprising:
first and second frames disposed opposite to each other;
third and fourth frames disposed opposite to each other between the first and second frames in a state of being spaced apart from each other by a predetermined distance, the third and fourth frames being formed to be smaller than the first and second frames;
a coil frame connected to the first frame at one end and connected to the second frame at an opposite end, the coil spring biasing the first and second frames in a direction away from each other;
a first fish trap mesh coupled to the first frame at one end and connected to the second frame at an opposite end;
a second fish trap mesh coupled to the first frame at one end and connected to the third frame at an opposite end;
a third fish trap mesh coupled to the second frame at one end and connected to the fourth frame at an opposite end;
a fourth fish trap mesh connected to the third frame at one end and connected to the fourth frame at an opposite end, the fourth fish trap mesh having a cut at a vicinity of a center portion such that a fish entrance in close contact with the cut portion is formed when the fish trap is unfolded; and
first and second foreign matter prevention units coupled between the first frame and the third frame and between the second frame and the fourth frame, respectively.

56. The fish trap of Claim 55, wherein the first foreign matter prevention unit includes:
a first foreign matter prevention frame formed to be smaller than the first frame; and
a first foreign matter prevention fish trap mesh coupled to the first foreign matter prevention frame, and
wherein the second foreign matter prevention unit includes:
a second foreign matter prevention frame formed to be smaller than the second frame; and
a second foreign matter prevention fish trap mesh coupled to the second foreign matter prevention frame.

57. The fish trap of Claim 56, wherein the first foreign matter prevention frame is connected between the first frame and the third frame by at least one connection member, and
the second foreign matter prevention frame is connected between the second frame and the fourth frame by at least one connection member.

58. The fish trap of Claim 56, further comprising a bait bag installed in at least one of the first foreign matter prevention unit or the second foreign matter prevention unit.

59. The fish trap of Claim 58, wherein the bait bag is integrally formed with the first and second foreign matter prevention fish trap meshes and is formed by tying a portion of the first and second foreign matter prevention fish trap meshes.

60. The fish trap of Claim 56, wherein the first and second foreign matter prevention frames are formed in any one of a circular shape, an oval shape, a triangular shape, a quadrangular shape, or a polygonal shape.
